# EUROPEAN PATENT APPLICATION

(11) **EP 1 089 263 A1**
(43) Date of publication of application: **04.04.2001**
(21) Application number: 00121432.9
(22) Date of filing: 29.09.2000
(51) Int. Cl.: G11B 5/702

(54) **Magnetic recording medium and method for making the same**

(30) Priority: 30.09.1999 JP 28025099
(71) Applicant: SONY CORPORATION, Tokyo (JP)
(72) Inventor: Ono, Toshitsugu, Shinagawa-ku, Tokyo (JP)
(74) Representative: MÜLLER & HOFFMANN Patentanwälte

(57) **Abstract**

A magnetic recording medium includes a nonmagnetic substrate and a magnetic layer formed on the nonmagnetic substrate. The magnetic layer includes a magnetic powder and a binder. The binder includes a polyester polyurethane resin containing a propanediol derivative, such as 2-butyl-2-ethyl-1,3-propanediol, as a raw material represented by the formula: 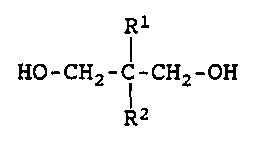 wherein at least one of R¹ and R² is a saturated hydrocarbon group having 4 to 8 carbon atoms and the other is a saturated hydrocarbon group or a hydrogen atom. The magnetic recording medium exhibits superior magnetostatic characteristics and electromagnetic transducing characteristics, regardless of the addition of a crosslinking agent.

## Description

### BACKGROUND OF THE INVENTION

### 1. Field of the Invention

The present invention relates to magnetic recording media, such as magnetic tapes and magnetic disks, each having a magnetic layer primarily composed of a magnetic powder and a binder formed on a nonmagnetic substrate, and relates to methods for making the same.

### 2. Description of the Related Art

In a typical coating-type magnetic recording medium, a magnetic layer is formed by coating a magnetic paint on a nonmagnetic substrate such as a polyester film, wherein the magnetic paint is prepared by dispersing a ferromagnetic powder, a binder, a dispersant, a lubricant, and an abrasive into an organic solvent.

The binder is compounded to bind the ferromagnetic powder in the magnetic layer. Requirements for the binder are high dispersibility of the ferromagnetic powder in the binder, and high dispersion stability when a prepared magnetic paint is stored for a certain period and when a lubricant and/or a crosslinking agent are added to the magnetic paint.

Examples of binders used in coating-type magnetic recording media include vinyl chloride copolymers, polyurethane resins, acrylonitrile-butadiene copolymers, cellulose resins, epoxy resins, and acrylic resins. Among them, polyester polyurethane resins containing adequate amounts of hydrophilic groups are frequently used in order to improve affinity of resins for ferromagnetic powder and dispersibility of the ferromagnetic powder. A typical polyester polyurethane resin which has been used is UR-8200 made by Toyobo Co., Ltd. The polyesterpolyol segments of this polyester polyurethane include dicarboxylic acid segments, such as terephthalic acid and isophthalic acid, and polyol (diol) segments, such as ethylene glycol.

In recent years, finer particulate ferromagnetic powder has been used in magnetic layers in order to achieve higher density recording on magnetic recording media. On the other hand, conventional polyester polyurethane resins do not have adequate solubility in organic solvents, such as toluene, methyl ethyl ketone, ethyl acetate, and mixtures thereof, which are generally used in production of paints for magnetic recording media. Thus, the resins do not show adequate affinity for the ferromagnetic powder and adequate dispersion of the ferromagnetic powder when a magnetic paint is prepared, resulting in unstable paint preservation properties.

Accordingly, dispersibility is significantly decreased when the paint is stored or when a lubricant and/or a crosslinking agent are added with stirring to the paint. Such a magnetic paint having poor dispersion stability is not suitable for magnetic recording media which must have adequate magnetostatic and electromagnetic transducing characteristics and smooth surfaces.

### SUMMARY OF THE INVENTION

Accordingly, it is an object of the present invention to provide a magnetic recording medium using a binder having high dispersion stability and exhibiting enhanced magnetostatic and electromagnetic transducing characteristics, and to provide a method for making the magnetic recording medium. In the present invention, a magnetic powder is adequately dispersed into the binder and dispersion is stable when a lubricant and/or a crosslinking agent are added.

According to an aspect of the present invention, a magnetic recording medium comprises a nonmagnetic substrate and a magnetic layer formed on the nonmagnetic substrate, the magnetic layer comprising a magnetic powder and a binder comprising a polyester polyurethane resin containing a propanediol derivative as a raw material represented by the formula: 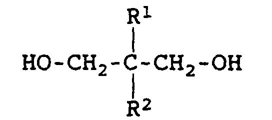 wherein at least one of R¹ and R² is a saturated hydrocarbon group having 4 to 8 carbon atoms, e.g., a butyl, pentyl, or hexyl group, and the other is a saturated hydrocarbon group, e.g., a methyl, ethyl, or propyl group, or a hydrogen atom.

According to another aspect of the present invention, a method for making a magnetic recording medium comprises the steps of: blending a magnetic powder and a binder so as to disperse the magnetic powder into the binder so as to prepare a magnetic paint; and applying the magnetic paint onto a nonmagnetic substrate to form a magnetic layer on the nonmagnetic substrate; wherein the binder comprises a polyester polyurethane resin containing a propanediol derivative as a raw material represented by the formula: 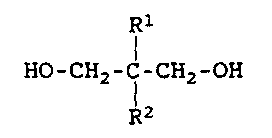 wherein at least one of R¹ and R² is a saturated hydrocarbon group having 4 to 8 carbon atoms and the other is a saturated hydrocarbon group or a hydrogen atom.

Preferably, at a final stage of the blending step, a decrease in gloss of the magnetic layer when a crosslinking agent is added is controlled to be 10% or less of the gloss of the magnetic layer when the crosslinking agent is not added.

According to the magnetic recording medium and the method for making the same of the present invention, the polyester polyurethane resin comprising the propanediol derivative has high solubility in organic solvents. Thus, a magnetic paint exhibiting high initial dispersibility and high dispersion stability. As a result, the magnetic recording medium exhibits superior magnetostatic characteristics and electromagnetic transducing characteristics.

### BRIEF DESCRIPTION OF THE DRAWINGS

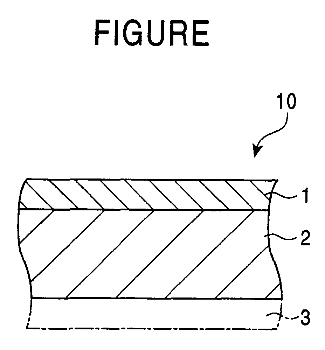

Fig. 1 is a schematic cross-sectional view of a magnetic recording medium in accordance with an embodiment of the present invention.

### DESCRIPTION OF THE PREFERRED EMBODIMENTS

In a magnetic recording medium and a method for making the same in accordance with the present invention, a polyester polyurethane resin represented by the following formula is used as a binder component: 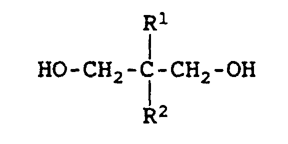 wherein at least one of R¹ and R² is a saturated hydrocarbon group having 4 to 8 carbon atoms and the other is a saturated hydrocarbon group or a hydrogen atom. The polyester polyurethane resin preferably has a glass transition temperature of at least 60°C to improve durability of the magnetic recording medium. In general, adding a hardener to a magnetic paint decreases gloss of the magnetic layer. However, when the polyester polyurethane resin is used, the gloss decreased only by 10% or less by adding the hardener, and such a decrease can be compensated for by controlling the timing and the amount of addition of the hardener, such as a polyfunctional isocyanate as a crosslinking agent. That is, characteristic advantages of the present invention are use of a binder having a higher glass transition temperature and improved gloss of the magnetic layer.

In the polyester polyurethane resin, the propanediol derivative is preferably 2-butyl-2-ethyl-1,3-propanediol (in the above formula, R¹ = butyl and R² = ethyl).

Preferably, the propanediol derivative is used as a diol component in polyester diol for forming the polyester polyurethane resin and/or a chain extender of the polyester polyurethane resin.

Preferably, the content of the propanediol derivative ranges from 6 to 60 percent by weight of all components of the polyester polyurethane resin, and the polyester polyurethane resin has a number average molecular weight in a range of 5,000 to 100,000.

The preferred embodiments of the present invention will now be described in more detail.

The polyester polyurethane resin of the present invention may be produced using the propanediol derivative, for example, 2-butyl-2-ethyl-1,3-propanediol according to a known process for making the polyester polyurethane resin. In the general process for making the polyester polyurethane resin, a polyester diol component (a) having an ester bond, and a chain extender (b), if necessary, are added to react a difunctional isocyanate (c) to form a polymerized polyester polyurethane resin. In this reaction, 2-butyl-2-ethyl-1,3-propanediol may be used as a diol component in the polyester diol component (a) or in a chain extender (b) in the present invention.

Examples of polyester diol components (a) having ester bonds include polyester diols prepared by polycondensation or ester exchange of diols, such as ethylene diol, 1,4-butanediol, and neopentyl glycol, with dicarboxylic acids, such as adipic acid, phthalic acid, and sebacic acid, or diesters thereof; and polylactone diols, such as polycaprolactone.

When 2-butyl-2-ethyl-1,3-propanediol is used as a diol component in the polyester diol (a), a predetermined amount of 2-butyl-2-ethyl-1,3-propanediol is added before synthesis of the polyester diol.

Examples of the chain extenders (b) include diols, such as ethylene glycol, 1,4-butanediol, and neopentyl glycol; diamines, such as ethylenediamine and tolylenediamine; and water.

When 2-butyl-2-ethyl-1,3-propanediol is used as a chain extender (b), a predetermined amount of 2-butyl-2-ethyl-1,3-propanediol is added as the chain extender (b) in a synthetic process for the polyester polyurethane resin.

The content of 2-butyl-2-ethyl-1,3-propanediol ranges preferably from 6 to 60 percent by weight, and more preferably from 15 to 50 percent by weight of all components of the polyester polyurethane resin. The preferable range of the propanediol derivative content is substantially the same for other propanediol derivatives. When the amount of 2-butyl-2-ethyl-1,3-propanedlol is less than 6 percent by weight, the glass transition temperature of the polyester polyurethane resin increases and the dispersion of the prepared paint is unstable. Even if 2-butyl-2-ethyl-1,3-propanediol is used alone as a chain extender, the amount is preferably controlled to be 60 percent by weight or less in relation to dilsocyanate used in the synthesis of the polyurethane resin and the molecular weight of the synthesized polyurethane resin.

Examples of difunctional isocyanates (2) include tolylene diisocyanate, diphenylmethane diisocyanate, hexamethylene diisocyanate, and isophorone diisocyanate.

The polyester polyurethane resin synthesized using 2-butyl-2-ethyl-1,3-propanedlol as a raw material has a number average molecular weight in a range of preferably 5,000 to 100,000 and more preferably 10,000 to 60,000. A molecular weight lower than the minimum causes decreased durability of the magnetic layer, whereas a molecular weight higher than the maximum causes poor solubility of the resin in organic solvents and decreased electromagnetic transducing characteristics. The glass transition temperature of the polyester polyurethane resin is preferably at least 60°C.

In the present invention, the polyester polyurethane resin may be used alone or used together with other binders which are conventionally used in coating-type magnetic recording media. Such binders are thermoplastic resins and thermosetting resins. Examples of known binders include polymers of vinyl chloride, vinyl acetate, vinyl alcohol, vinylidene chloride, acrylic esters, methacrylic esters, styrene, butadiene, and acrylonitrile; polyester resins; and epoxy resins.

In the present invention, known ferromagnetic powders may be used as a component of the magnetic paint without limitation. Examples of ferromagnetic powders include ferromagnetic iron oxide particles, ferromagnetic chromium dioxide particles, hexagonal platelet ferrite particles, and ferromagnetic metallic particles.

The ferromagnetic powder may contain appropriate amounts of powdered light elements, such as aluminum, silicon, phosphorus, and boron, in order to avoid sintering during reduction process and to maintain the shape of the ferromagnetic powder. The above ferromagnetic powders may be used alone or in combination. The use of a ferromagnetic powder having a large specific area is preferable to achieve high-density recording.

Known organic solvents, such as ketones, alcohols, esters, ethers, hydrocarbons, and halogenated hydrocarbons, can be used for dispersing the ferromagnetic powders and the binders in the production of the paints, depending on the types of the ferromagnetic powders and the binders.

The magnetic paint may contain other additives, such as dispersants, abrasives, antistatic agents, and rust preventives, which are conventionally used in magnetic recording media.

In preparing the magnetic paint, the above-mentioned materials may be mixed using a roll mill, a ball mill, a sand mill, a kneader, an extruder, a homogenizer, or an ultrasonic dispersion mixer. The resulting magnetic paint may be applied onto a nonmagnetic substrate using a gravure coater, a knife coater, a blade coater, a reverse roll coater, or a die coater.

Examples of nonmagnetic substrates include polymeric substrates composed of, for example, polyesters, polyolefins, cellulose derivatives, vinyl resins, polyimides, polyamides, and polycarbonates; metal substrates composed of, for example, aluminum alloys and titanium alloys; and glass substrates. The nonmagnetic substrate may be in any form, such as a tape, a sheet, or a drum. The nonmagnetic substrate may be subjected to a surface treatment to control surface properties, for example, so as to form fine irregularities.

The magnetic recording medium in accordance with the present invention may include a single magnetic layer or multiple magnetic layers. In addition, an undercoat layer or a nonmagnetic layer as an interlayer may be provided between the magnetic layer and the nonmagnetic substrate. Moreover, a topcoat layer containing a lubricant and a rust preventive may be provided on the surface of the magnetic layer, if necessary. The back surface of the nonmagnetic substrate may be provided with a back-coat layer to improve travelling characteristics and to prevent charging and transfer.

In production of the back-coat layer, for example, particles such as inorganic pigments are dispersed into a binder, the mixture is kneaded with an organic solvent which is selected depending on the type of the binder, and the resulting back-coat paint is applied to the back surface of the nonmagnetic substrate.

Conventional particles exhibiting antistatic and lubricating effects may be used in the present invention. Examples of such particles include graphite, carbon black, carbon black grafted polymers, tungsten disulfide, molybdenum disulfide, and titanium oxide. These particles may be used alone or in combination.

Known binders may be contained in the back-coat layer. Examples of known binders are thermoplastic resins and thermosetting resins, as described above. The back-coat layer may contain other conventional additives, such as dispersants, abrasives, and antistatic agents, without restriction.

Fig. 1 shows a coating-type magnetic recording medium 10 as an embodiment in accordance with the present invention. A magnetic layer 1 is formed on a nonmagnetic substrate 2. In this embodiment, a back-coat layer 3 as an optional layer is formed on the back surface of the nonmagnetic layer 2. The magnetic layer 1 is formed by coating a magnetic paint containing the above-mentioned ferromagnetic powder and the above-mentioned binder. The magnetic recording medium 10 may be, for example, a magnetic tape.

### Examples

The present invention will now be described in more detail with reference to Examples.

### Synthesis of Polyester Polyurethane Resin

A polyester polyurethane resin as a binder of a magnetic layer was synthesized as follows.

A polyester polyol was synthesized by ester exchange or polycondensation using appropriate dicarboxylic acid sources selected from dimethyl terephthalate and dimethyl isophthalate, and diols selected from 2-butyl-2-ethyl-1,3-propanediol (DMH), neopentyl glycol, cyclohexanedimethanol, and ethylene glycol. The polyester polyol, a chain extender, e.g., neopentyl glycol or DMH, a polar group source, e.g., N-methyldiethanolamine, and a diisocyanate (DI), e.g., diphenylmethane diisocyanate (MDI), were allowed to react to prepare polyester polyurethane resins A, B, C, D, E, and F shown in Table 1. Table 1 includes the loading ratios of raw materials, the number average molecular weight determined by gel permeation chromatography (GPC), and the glass transition temperature determined by differential scanning calorimetry (DSC) of the polyester polyurethane resin.

The polyester polyurethane resins were compounded with other components according to the following formulation using a sand mill for 6 hours to prepare magnetic paints.

### Formulation of Magnetic Paint (parts by weight)

| | |
|---|---|
| Powdered iron (BET specific surface area: 55 m²/g) | 100 |
| Polyester polyurethane resin A, B, C, D, E, or F | 10 |
| Vinyl chloride resin (MR-110 made by Nippon Zeon Co., Ltd.) | 10 |
| Alumina (average diameter: 0.3 µm) | 5 |
| Carbon black (average diameter: 0.15 µm) | 2 |
| Stearic acid | 1 |
| Butyl stearate | 1 |
| Methyl ethyl ketone | 100 |
| Toluene | 100 |
| Cyclohexane | 100 |

Into each of the resulting paints, 4 parts by weight of Coronate L (Nippon Polyurethane Industry Co., Ltd.) as a crosslinking agent was added, and the mixture was applied onto a polyethylene terephthalate film having a thickness of 7 µm so that the dried thickness was 2.5 µm, was subjected to magnetic orientation, was dried, and was coiled. The film was supercalendered and was cured at 70°C for a predetermined time to form a magnetic layer. A back-coat layer was formed as in a conventional 8-mm videotape (made by Sony Corporation), and was spliced to form sample tapes with a 8-mm width.

The sample tapes A, B, C, D, E, and F were thereby prepared using the polyester polyurethane resins A, B, C, D, E, and F, respectively.

The dispersion stability, magnetostatic characteristics, and electromagnetic transducing characteristics of each tape were evaluated. The dispersion stability was evaluated as follows. A magnetic paint not containing a crosslinking agent and a magnetic paint containing a crosslinking agent were applied onto sample tapes, and the gloss at an incident angle of 45° was measured for each tape. The magnetostatic characteristics were evaluated by a residual magnetic flux density and a remanence ratio. For evaluating the electromagnetic transducing characteristics, 5 MHz signals were recorded on each sample tape, and the read output and Y-S/N were compared to those of a standard magnetic tape made by Sony Corporation. The results are shown in Table 2.

**Table 1**

| Loading Ratio (parts by weight) | | Resin A | Resin B | Resin C |
|---|---|---|---|---|
| Acid Component in Polyester | Terephthalic acid | 25 | 25 | 16 |
| | Isophthalic acid | 25 | 25 | 36 |
| Diol Component in Polyester | DMH | 24 | 14 | 5 |
| | Neopentyl glycol | 15 | 15 | - |
| | Cyclohexanedimethenol | - | 9 | 23 |
| | Ethylene glycol | - | - | 8 |
| Chain Extender | Neopentyl glycol | 1 | 1 | - |
| | DMH | - | - | 1 |
| DI | MDI | 10 | 11 | 11 |
| Number Average Molecular Weight | | 22,000 | 20,000 | 21,000 |
| Glass Transition Temperature (°C) | | 70 | 75 | 70 |

| Loading Ratio | (parts by weight) | Resin D | Resin E | Resin F |
|---|---|---|---|---|
| Acid Component in Polyester | Terephthalic acid | 13 | 28 | 31 |
| | Isophthalic acid | 29 | 28 | 31 |
| Diol Component in Polyester | DMH | - | - | - |
| | Neopentyl glycol | 8 | 7 | 10 |
| | Cyclohexanedimethanol | 25 | 15 | - |
| | Ethylene glycol | - | 10 | 16 |
| Chain Extender | Neopentyl glycol | - | 1 | 1 |
| | DMH | 8 | - | - |
| DI | MDI | 17 | 11 | 11 |
| Number Average Molecular Weight | | 21,000 | 20,000 | 20,000 |
| Glass Transition Temperature (°C) | | 75 | 70 | 70 |

**Table 2**

| Polyester Polyurethane Resin | | A | B | C |
|---|---|---|---|---|
| Sample Tape | | A | B | C |
| Gloss (%) | Crosslinking Agent not added | 200 | 190 | 185 |
| | Crosslinking Agent added | 200 | 180 | 190 |
| Magnetostatic Characteristics | Residual magnetic flux density (mT) | 280 | 270 | 265 |
| | Remanence Ratio | 0.875 | 0.865 | 0.855 |
| Electromagnetic Transducing Characteristics | Read Output (dB) | +3.0 | +2.5 | +2.0 |
| | Y-S/N (dB) | +2.5 | +2.0 | +1.5 |

| Polyester Polyurethane Resin | | D | E | F |
|---|---|---|---|---|
| Sample Tape | | D | E | F |
| Gloss (%) | Crosslinking Agent not added | 185 | 185 | 190 |
| | Crosslinking Agent added | 180 | 150 | 105 |
| Magnetostatic Characteristics | Residual magnetic flux density (mT) | 270 | 220 | 190 |
| | Remanence Ratio | 0.860 | 0.830 | 0.795 |
| Electromagnetic Transducing Characteristics | Read Output (dB) | +2.0 | +1.0 | +1.5 |
| | Y-S/N (dB) | +2.0 | +0.5 | +0.1 |

As shown in Table 2, the sample tapes A, B, C, and D in accordance with the present invention exhibit superior results regarding dispersion stability, magnetostatic characteristics, and electromagnetic transducing characteristics for the following reasons. Since the polyester polyurethane resin as a binder has high solubility in the solvent, the affinity of the polyester polyurethane resin for the ferromagnetic powder does not substantially change regardless of the addition of the crosslinking agent, as shown by a decrease of 10% or less in gloss.

In contrast, the sample tapes E and F do not exhibit satisfactory dispersion stability, magnetostatic characteristics, nor electromagnetic transducing characteristics, due to inadequate solubility of the polyester polyurethane resin as a binder in the solvent. In these systems, the affinity of the polyester polyurethane resin significantly changes by the addition of the crosslinking agent. Thus, the gloss significantly decreases by the addition of the crosslinking agent.

## Claims

1. A magnetic recording medium comprising a nonmagnetic substrate and a magnetic layer formed on the nonmagnetic substrate, the magnetic layer comprising a magnetic powder and a binder comprising a polyester polyurethane resin containing a propanediol derivative as a raw material represented by the formula: 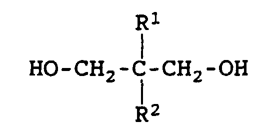 wherein at least one of R¹ and R² is a saturated hydrocarbon group having 4 to 8 carbon atoms and the other is a saturated hydrocarbon group or a hydrogen atom.

2. A magnetic recording medium according to claim 1, wherein the polyester polyurethane resin has a glass transition temperature of at least 60°C.

3. A magnetic recording medium according to claim 1, wherein the propanediol derivative is 2-butyl-2-ethyl-1,3-propanediol.

4. A magnetic recording medium according to claim 1, wherein the propanediol derivative is used as at least one of a diol component in polyester diol for forming the polyester polyurethane resin and a chain extender of the polyester polyurethane resin.

5. A magnetic recording medium according to claim 1, wherein the content of the propanediol derivative ranges from 6 to 60 percent by weight of the polyester polyurethane resin.

6. A magnetic recording medium according to claim 1, wherein the polyester polyurethane resin has a number average molecular weight in a range of 5,000 to 100,000.

7. A magnetic recording medium according to claim 1, wherein the magnetic layer is formed of a magnetic paint containing a polyfunctional isocyanate as a crosslinking agent.

8. A method for making a magnetic recording medium comprising the steps of:
blending a magnetic powder and a binder so as to disperse the magnetic powder into the binder so as to prepare a magnetic paint; and
applying the magnetic paint onto a nonmagnetic substrate to form a magnetic layer on the nonmagnetic substrate;
wherein the binder comprises a polyester polyurethane resin containing a propanediol derivative as a raw material represented by the formula: 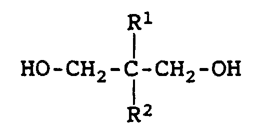 wherein at least one of R¹ and R² is a saturated hydrocarbon group having 4 to 8 carbon atoms and the other is a saturated hydrocarbon group or a hydrogen atom.

9. A method for making a magnetic recording medium according to claim 8, wherein, at a final stage of the blending step, a decrease in gloss of the magnetic layer when a crosslinking agent is added is controlled to be 10% or less of the gloss of the magnetic layer when the crosslinking agent is not added.

10. A method for making a magnetic recording medium according to claim 8, wherein the propanediol derivative is 2-butyl-2-ethyl-1,3-propanediol.

11. A method for making a magnetic recording medium according to claim 8, wherein the propanediol derivative is used as at least one of a diol component in polyester diol for forming the polyester polyurethane resin and a chain extender of the polyester polyurethane resin.

12. A method for making a magnetic recording medium according to claim 8, wherein the content of the propanediol derivative ranges from 6 to 60 percent by weight of the polyester polyurethane resin.

13. A method for making a magnetic recording medium according to claim 8, wherein the polyester polyurethane resin has a number average molecular weight in a range of 5,000 to 100,000.

14. A method for making a magnetic recording medium according to claim 8, wherein the polyester polyurethane resin has a glass transition temperature of at least 60°C.

15. A method for making a magnetic recording medium according to claim 8, wherein the magnetic layer is formed of a magnetic paint containing a polyfunctional isocyanate as a crosslinking agent.
